Europäisches Patentamt

European Patent Office

Office européen des brevets

(19)

(11) Publication number: **0 164 189**

**B1**

(12)

# EUROPEAN PATENT SPECIFICATION

(45) Date of publication of patent specification: **10.08.88**

(51) Int. Cl.⁴: **F 16 K 15/04, F 16 K 1/14**

(21) Application number: **85302335.6**

(22) Date of filing: **03.04.85**

(54) **Flow rate control valve.**

(30) Priority: **05.04.84 ZA 842579**

(43) Date of publication of application:
**11.12.85 Bulletin 85/50**

(45) Publication of the grant of the patent:
**10.08.88 Bulletin 88/32**

(84) Designated Contracting States:
**AT BE CH DE FR GB IT LI LU NL SE**

(58) References cited:
**DD-A- 69 016**
**FR-A-2 253 971**
**FR-A-2 538 873**
**GB-A- 142 554**
**GB-A- 310 738**
**US-A-3 346 008**
**US-A-4 393 895**

(73) Proprietor: **van Rensburg, Gert Nel Janse**
**21 Koper Street Farrarmere, Extension 21**
**Benoni Transvaal (ZA)**

(72) Inventor: **van Rensburg, Gert Nel Janse**
**21 Koper Street Farrarmere, Extension 21**
**Benoni Transvaal (ZA)**

(74) Representative: **Walter, Douglas Ernest et al**
**HASELTINE LAKE & CO. Hazlitt House 28**
**Southampton Buildings Chancery Lane**
**London WC2A 1AT (GB)**

Courier Press, Leamington Spa, England.

EP 0 164 189 B1

## Description

### Background to the Invention

This invention relates to flow valves for fluids.

The invention relates more particularly to valves for liquids including slurries which can cause severe wear and/or tend to cause blockages or severe stresses at valves due to build-up of solid materials. An example of such a known valve is disscosed in GB—A—310738 from which it will be noted that a shut-off ball is movably mounted in a housing extending perpendicular to the intended direction of flow through a pipeline in which the valve is installed. US—A—3346008, on the other hand discloses a housing in which a shut-off ball is movably mounted in a direction inclined at 45° to the intended direction of fluid flow. An object of the present invention is to provide a valve of this generally known kind in which a valve seat is readily accessible for removal and, when required, replacement.

According to the invention there is provided an adjustable non-return ball valve as specified in Claim 1. The features of the precharacterising portion of claim 1 are known from GB—A—310738.

The valve seat of a valve in accordance with the invention may advantageously be formed by a centrally disposed insert formed in an annular plate.

The valve seat may be made of, or lined with, wear-resistant metallic material, or be made of, or lined with, plastics material. The ball may be made of, or coated with, plastics material, or be made of, or coated with, wear-resistant metallic material, respectively.

A mechanically operable device of the valve may be removably mountable on an auxiliary housing thereof.

### Brief Description of the Drawing

Non-return ball valves according to the invention will now be described with reference to the accompanying drawing in which:

Figure 1 is a cross-sectional side elevation of the valve;

Figure 2 is a top plan view of a valve seat; and

Figure 3 is a sectional side elevation of the valve seat.

### Description of a preferred embodiment

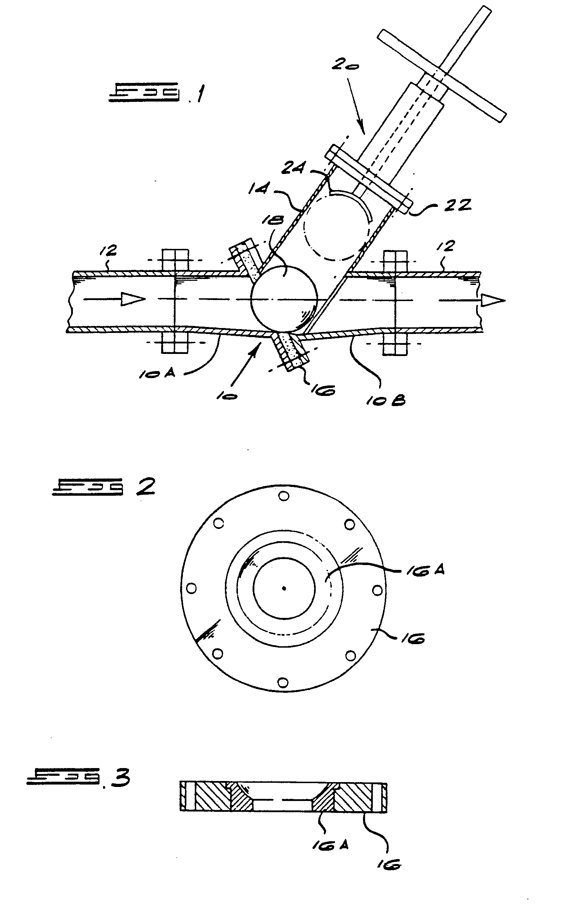

Referring to the drawing, in Figure 1 the valve has a main housing 10, formed of two parts 10A and 10B, connected at each end to flow pipes 12. An auxiliary housing 14 is rigidly joined to part 10B of the main housing with its longitudinal axis obtusely inclined at an angle of appoximately 135° to the longitudinal axis of the main housing 10 with respect to the intended single direction of fluid flow that is indicated by arrows in Figure 1. A circular valve seat 16 is held between opposed flanges on the parts 10A and 10B and extends across the main housing at the lower end of the auxiliary housing 14. A stainless steel ball 18 is shown against the seat 16 and is free to move upwards to its position shown dotted. The ball is loosely entrapped withyin the auxiliary housing 14. The ball 18 is thus free to rotate and during material flow through the housing 14 this tends to cause self-cleaning of the surfaces of the ball 18 as well as scouring of the mating surfaces of the valve seat 16.

When material flows through the main housing from left to right, the ball 18 automatically rides upwards within the auxiliary housing 14 to allow material to pass the valve seat 16 and through both the housings 10 and 14. If the material attempts to flow from right to left the ball falls under gravity and in that direction of flow to seat firmly against the valve seat 16 to prevent further flow in that direction. Thus, in this manner, the valve acts as an automatic one-way valve.

At the upper end of the auxiliary housing 14 a mechanically operable valve control mechanism (closure device) 20 is mounted on an end plate 22. The mechanism 20 has a dish 24 at its lower end which fits over the ball 18 but allows the ball 18 to rotate relative thereto. The dish 24 can be moved downwards by screwing the mechanism 20 to urge the ball 18 against the valve seat 16 and to close-off the valve. At intermediate positions of the dish 24 a corresponding throttling of the valve is provided. Thus, by operation of the mechanism 20 the valve can be turned ON and OFF and also be adjustably throttled according to the setting of the mechanism 20.

The mechanism 20 comprises essentially the dish 24 and a screw threaded shaft. The mechanism 20 is manually operated by turning the threaded shaft as required. The mechanism 20 can however take any convenient form and can be arranged to be electrically or pneumatically operable for example.

In figure 1 the valve seat 16 comprises one piece of material suitably chamfered to provide a mating surface for the ball 18. An important feature is that the valve seat 16 can be removed and replaced very easily by removing bolts (not shown — connecting the parts 10A and 10B together and then sliding the valve seat 16 out-from between the parts 10A and 10B.

In Figures 2 and 3 the valve seat is shown in which the mating surface for the ball is provided by a centrally disposed insert 16A. This means that, when the mating surface is worn, a replacement insert is provided and the whole of the plate or seat 16 need not be replaced. If the mating surfaces have to be formed of very costly material then, by using only an insert formed of that material, the cost can be much reduced.

It will be appreciated that the ball 18 can be easily removed for servicing or replacement by removing the mechanism 20 to allow the ball to pass out of the top of the auxiliary chamber 14.

A wide choice of materials is possible for the valve seat 16, the ball 18 and the dish 24, to suit the form or type of material which in use flows through the valve. It is also possible and relatively simple to form or to line the inner surfaces of the housings 10 and 14 with chosen and appropriate materials. Because the ball 18 is generally free to move within the housing 14 there is little or no tendency for the ball 18 itself to become frictionally jammed or positively restrained in a valve blocking position. Further, during use, the flow of material through the valve tends to cause the ball to float and to rotate to cause self-cleaning of its surface and even scouring of the valve seat and the inside of the housing 14.

Generally, the weight of the ball affects the characteristics or performance of the valve and a heavier ball is provided or preferred with flow materials which have higher mean specific gravities.

The auxilary chamber 14 and the part 10B may be formed integrally in a casting process.

### Claims

1. An adjustable non-return ball valve, for connection in a pipe line, comprising an elongate main housing (10) arranged to be connected at each end to flow pipes (12), an auxiliary housing (14) mounted intermediate the ends of the main housing (10) and having its longitudinal axis inclined to the longitudinal axis of the main housing (10), a circular valve seat (16) at a lower end of the auxiliary housing (14) in a plane transverse to the longitudinal axis thereof and which extends across the main housing (10), a ball (18) which fits the valve seat (16) and is loosely entrapped in the auxiliary housing (14) to allow flow in only single direction through the main housing (10) in which event, and in use, the ball (18) automatically rides up in the auxiliary housing (14) and away from the valve seat (16), and an adjustable mechanical operable closure device (20) for the valve which fits at an upper end of the auxiliary housing (14) and is arranged to urge and hold the ball (18) downwards towards the valve seat (16) to throttle or close-off the valve according to the setting of the closure device (20), characterised in that the main housing (10) is formed of two parts (10A, 10B) joined together along said plane transverse to the longitudinal axis of the auxiliary housing (14) and around the circumference of the valve seat (16), in that the valve seat (16) is arranged to slide along the transverse plane and between the two parts (10A, 10B) for removal and replacement, and in that the longitudinal axis of the auxiliary housing (14) is obtusely inclined to the longitudinal axis of the main housing (10) with respect to the intended single direction of flow through the main housing (10).

2. A valve according to claim 1 characterised in that the valve seat (16) is formed by a centrally disposed insert (16A) formed in an annular plate.

3. A valve according to claim 1 or 2, characterised in that the valve seat (16) is formed of wear resistant metallic material.

4. A valve according to claim 1 or 2, characterised in that the valve seat (16) is formed of plastics material.

5. A valve according to any preceding claim, characterised in that the ball (18) has an outer surface formed of wear resistant metallic material.

6. A valve according to any one of claims 1 to 4, characterised in that the ball (18) has an outer surface formed of plastics material.

7. A valve according to any preceding claim, characterised in that the operable closure device (20) is removably mounted on the auxiliary housing (14) in a manner to allow the ball (18) to be removed once the device (20) is removed.

8. A valve according to any preceding claim, characterised in that one (10B) of said two parts (10A, 10B) is formed rigidly with the auxiliary housing (14).

### Patentansprüche

1. Einstellbarer Rückschlag-Kugelhahn zum Anschluß an eine Rohrleitung, bestehend aus einem verlängerten Hauptgehäuse (10), das so eingerichtet ist, daß es sich an jedem Ende an Flüssigkeitsleitungsrohre (12) anschließen läßt, aus einem Nebengehäuse (14), das in der Mitte zwischen den Enden des Hauptgehäuses (10) angebracht ist und dessen Längsachse zur Längsachse des Hauptgehäuses (10) geneigt ist, aus einem kreisförmigen Ventilsitz (16) am unteren Ende des Nebengehäuses (14) in einer quer zu dessen Längachse verlaufenden Ebene, der sich von einer Seite des Hauptgehäuses (10) zur anderen erstreckt, aus einer Kugel (18), die sich in den Ventilsitz (16) einfügt und lose im Nebengehäuse (14) eingeschlossen ist, um die Strömung nur in einer Richtung durch das Hauptgehäuse (10) durchzulassen, wobei im einsatzfall die Kugel (18) automatisch im Nebengehäuse (14) und vom Ventilsitz (16) weg hochfährt, und aus einer verstellbaren und mechanisch zu betätigenden Schließvorrichtung (20) für den Hahn, die sich in ein oberes Ende des Nebengehäuses (14) einfügt und so eingerichtet ist, daß sie die Kugel (18) nach unten auf den Ventilsitz (16) in ihre Lage zwingt und festhält, um den Hahn entsprechend der Einstellung der Schließvorrichtung (20) zu drosseln oder abzusperren, dadurch gekennzeichnet, daß das Hauptgehäuse (10) aus zwei Hälften (10A, 10B) gebildet wird, die entlang der erwähnten quer zu Längsachse des Nebengehäuses (14) verlaufenden Ebene und um den Umfang des Ventilsitzes (16) herum zusammengefügt sind, daß der Ventilsitz (16) so eingerichtet ist, daß er zum Abnehmen und Wiederaufsetzen auf der Querebene und zwischen den beiden Hälften (10A, 10B) gleitet, und daß die Längsachse des Nebengehäuses (14) in bezug auf die vorgesehene einzelne Strömungsrichtung durch das Hauptgehäuse (10) im stumpfen Winkel zur Längsachse des Hauptgehäuses (10) geneigt ist.

2. Hahn gemäß der Patentanspruch 1, dadurch gekennzeichnet, daß der Ventilsitz (16) durch ein mittig angeordnetes Einsatzteil (16A) gebildet wird, das auf einer kreisförmigen Scheibe geformt ist.

3. Hahn gemäß dem Patentanspruch 1 oder 2, dadurch gekennzeichnet, daß der Ventilsitz (16) aus einem verschließfesten Metallwerkstoff gebildet ist.

4. Hahn gemäß dem Patentanspruch 1 oder 2, dadurch gekennzeichnet, daß der Ventilsitz (16) aus einem Chemiewerkstoff gebildet ist.

5. Hahn gemäß einem der vorstehenden Patentansprüche, dadurch gekennzeichnet, daß die Kugel (18) eine Außenoderfläche aufweist, die aus einem verschließfesten Metallwerkstoff gebildet ist.

6. Hahn gemäß einem der Patentansprüche 1 bis 4, dadurch gekennzeichnet, daß die Kugel (18) eine Außenoberfläche aufweist, die aus einem Chemiewerkstoff gebildet ist.

7. Hahn gemäß der vorstehenden Patentansprüche, dadurch gekennzeichnet, daß die zu betätigende Schließvorrichtung (20) abnehmbar in einer Weise auf dem Nebengehäuse (14) angebracht ist, daß sich die Kugel herausnehmen läßt, nachdem die Vorrichtung (20) abgenommen worden ist.

8. Hahn gemäß einem der vorstehenden Patentansprüche, dadurch gekennzeichnet, daß eine (10B); der beiden Hälften (10A, 10B) in festem Verbund mit dem Nebengehäuse (14) gebildet ist.

**Revendications**

1. Clapet sphérique de retenus réglable, pour raccordement dans un canalisation, comprenant un logement principal (10) allongé, prévu pour être relié à chaque extrémité à des tubes d'écoulement (12), un logement (14) auxiliaire monté entre les extrémités du logement principal (10) et ayant son axe longitudinal incliné par rapport à l'axe longitudinal du logement principal (10), un siège de soupape circulaire (16) à une extrémité inférieure du logement auxiliaire (14) dans un plan transversal à l'axe longitudinal dudit logement et qui s'étend en travers du logement principal (10), une bille (18) qui s'emboîte dans le siège de soupape (16) et qui est emprisonnée non rigidement dans le logement auxiliaire pour permettre l'écoulement seulement en un sens par le logement principal (10), dans lequel cas, et lors de l'emploi, la bille (18) s'élève automatiquement dans le logement auxiliaire (14) dans le sens d'un éloignement du siège de soupape (16) et un dispositif de fermeture réglable pouvant être actionné mécaniquement (20) pour la soupape qui se loge à une extrémité supérieure du logement auxiliaire (14) et est conçu pour solliciter et maintenir le bille (18) vers le bas vers le siège de soupape pour étrangler ou fermer la soupape selon le réglage du dispositif de fermeture (20), caractérisé en ce que le logement principal (10) est constitué en deux parties (10A, 10B) reliées ensemble selon ledit plan transversal à l'axe longitudinal du logement auxiliaire (14) et autour de la circonférence du siège de soupape (16), en ce que le siège de soupape (16) est conçu pour glissement le long du plan transversal et entre les deux parties (10A, 10B) pour enlèvement et remplacement, et en ce que l'axe longitudinal du logement auxiliaire (14) est incliné à un angle obtus par rapport à l'axe longitudinal du logement principal (10) par rapport au sens unique prévu d'écoulement par le logement principal (10).

2. Clapet selon la revendication 1 charactérisé en ce que le siège de soupape (16) est constitué par un élément rapporté (16A) disposé centralement formé par un plaque annulaire.

3. Clapet selon la revendication 1 ou 2, caractérisé en ce que le siège de soupape (16) est constitué en matériau métallique résistant à l'usure.

4. Clapet selon la revendication 1 ou 2, caractérisé en ce que le siège de soupape (16) est constitué en matière plastique.

5. Clapet selon toute revendication précédente, caractérisé en ce que la bille (18) a une surface extérieure constituée en un matériau métallique résistant à l'usure.

6. Clapet selon l'une quelconque des revendications 1 à 4, caractérisé en ce que la bille (18) a une surface extérieure constituée en matière plastique.

7. Clapet selon toute revendication précédente, caractérisé en ce que le dispositif de fermeture (20) pouvant être actionné est monté amoviblement sur le logement auxiliaire (14) de manière à permettre à la bille (18) d'être enlevée après que le dispositif (20) a été enlevé.

8. Clapet selon toute revendication précédente, caractérisé en ce que l'une (10B) des deux parties (10A, 10B) est constituée rigidement avec le logement auxiliaire (14).

Fig. 1

Fig. 2

Fig. 3